# EUROPEAN PATENT APPLICATION

(11) **EP 1 262 898 A2**
(43) Date of publication of application: **04.12.2002**
(21) Application number: 02405438.9
(22) Date of filing: 31.05.2002
(51) Int. Cl.: G06F 17/60

(54) **"Web card" system**

(30) Priority: 02.06.2001 US 295400 P
(71) Applicant: Baby Croesus S.A., 1700 Fribourg (CH)
(72) Inventor: Weber, Philippe Jean, 1052 Le Mont-Sur-Lausanne (CH)
(74) Representative: Kiliaridis, Constantin

(57) **Abstract**

A computerized method of allowing access and utilisation control of a web site's functions and sub-functions using a system generated access code and that the current or potential user can obtain on supports such as cards or other. It can even remunerate all or part of the interveners, the site owner, the site manager, or the users. This system is not influenced by the web site category, the site development method and tools, or by the site access tools.

## Description

### Background of the Invention

This invention relates to e-commerce systems, and, more particularly, to e-commerce payment systems.

A significant portion of the public having access to the Internet has yet to begin making purchases on the Internet. The means that exist for doing so generally comprise the payment by credit card or by an e-bank account. However, these methods are costly, inefficient and not anonymous.

The resources needed to service clients with acceptable service guarantees is often limited. Currently, as the number of users which use a site increases, the quality of service decreases as system resources are squeezed.

It is desired to minimize the amount of effort required in making purchases via the Internet without unnecessarily compromising quality of service or security. It is also desired to have a method of providing a binding "electronic signature" to conclude enforceable transactions initiated on the Internet.

Many web sites provide anonymous access to content on the Internet. However, such access is either granted, or it is not, with nothing in between and no customization of the access.

Therefore, what is needed is a means of executing multiple secured transactions or services on Web sites using a system which ensures an "electronic signature", anonymity, and accurate payment for each transaction.

What is also needed is a means for web site owners to provide their web users with anonymity and ensuring a controlled source of income by the sale of access code on cards or other media, independent from effective Site Utilisation by the Site Owner.

What is also needed is a means to control the number of potential, effective and active Users (per each action and profile) on a site in order to better manage system resources. For publicists and other suppliers of related content, what is needed is a means to control either fully or partially and to anticipate, the number of potential, effective and active Site Users. What is also needed is a .

What is also needed is a means to control more fully Users actions while ensuring anonymity .

### Summary of the Invention

A computer system having a computer-readable medium encoded with a method of allowing access and utilisation control of a web site's functions and sub-functions, the method using a system generated access code that the current or potential user can obtain on supports such as cards or other media, the method comprises the following modules:
a. a module to manage the commercial parameters of the system for clients,
b. a module to manage the technical parameters of the system for the clients, to deal with items like access control, security, IP addresses, MAC addresses, GPS, and other technical criteria,
c. a module to manage the dialog between the system and the clients,
d. a module to manage the dialog between third parties, like buyers, sellers of goods and services,
e. a module to manage the validation and feasibility of any transaction with the system,
f. a module to manage the locking and unlocking process of clients and transactions,
g. a module to manage all the operations concerning the access to codes, like generation of access codes, values, date of expiration.

The "WEB CARD" system is a method allowing access and utilisation control of any web site's functions and sub-functions, supporting the system, using a access code generated by the system. Furthermore, it enables the remuneration of all or part of the interveners, such the site owner, the manager, the users.

We will call "Web Card " system the system proposed by the present invention, but the access code not being available to the end user no exclusively on a card medium but

In a first advantage of the invention, web card users are able to execute all kinds of secured transactions or services on WEB sites or similar platforms using the "WEB Card" system, ensuring an "electronic signature" via the access code and anonymity while operating, having paid the correct price for this transaction.

In a second advantage of the invention, Site Owners using the "WEB Card" system can ensure anonymity to Site Users using the "WEB Card" system; ensure a controlled source of income due to access codes sale on cards or other media, independent from effective Site Utilisation by the Site Owner; and control fully, by card or CD printing, the number of potential, effective and active Users (per each action and profile) on a site using the "WEB Card" system. The site owner or client my be web site, a shop, a transportation company etc.

In a third advantage, for Publicists or other Suppliers of related contents, they can control fully, partially and anticipate, the number of potential, effective and active Site Users using the "WEB Card" system and control fully Users actions by category, profile and period, while ensuring anonymity to the "WEB Card" Users.

### Brief Description of the Drawings

Fig. **1** is a schematic diagram of the process of the invention.
Fig. **2** is a drawing showing an example of the entering of settings into the invention.
Fig. **3** is a drawing of an input page showing site access by code insertion.
Fig. **4** is a drawing showing an example of specified operations control.

### Detailed Description of the Preferred Embodiment

### ECONOMIC MOTIVATIONS AND PURPOSE

The economic motivations of the "WEB Card" system interveners are the following:
o **For Web Card Users:**
   ■ Execute all kinds of secured transactions or services on WEB sites or similar platforms using the "WEB Card" system, ensuring an "electronic signature" via the access code and anonymity while operating, having paid the correct price for this transaction.
o **For Site Owners using the "WEB Card" system:**
   ■ Can ensure anonymity to Site Users using the "WEB Card" system.
   ■ Ensure a controlled source of income due to access codes sale on cards or other media, independent from effective Site Utilisation by the Site Owner.
   ■ Control fully the number of potential, effective and active Users (per each action and profile) on a site using the "WEB Card" system.
o **For Publicists or other Suppliers of related contents:**
   ■ Control fully, partially and anticipate, the number of potential, effective and active Site Users using the "WEB Card" system.
   ■ Control fully Users actions by category, profile and period, while ensuring anonymity to the "WEB Card" Users.

### Utilisation Example of the "WEB Card" system

The utilisation example of the "WEB Card" system is based on the first site applying this system. It is a portal for direct purchase and/or sale, and auction sale. For this example it is called "Sale Portal Site". The utilisation example can be described as follows:

### - Phase 1

For this example, the user is Mr. White. His first action is to purchase an access code on a card of the "Web Card" system at one of the licensed points of sale.

Such as a bookshop for example, where Mr. White purchases the card he desires according to the number of functions (action, purchase or sale -in this example) indicated on the "Web Card".

Mr. White scrapes off the coating at the back of the card to reveal an access code number called "Web Code". It is composed of two sets of eight alphanumerical digits.

The card provides the following information:
■ The name and address of the web site: www.babycroesus.com
■ The number of actions the card enables Mr. White: 10 actions
■ The "Web Code" which will enable Mr. White to access the site.

### - Phase 2

Mr. White goes home and connects to Internet via his personal computer.

He enters the name of the site: www.babycroesus.com and connects to the multi-services portal site (sale, purchase, advertisement). After having entered his personal data and accepted the terms and conditions of the site, Mr. White enters his access code as stated on his card.

Mr. White is now connected and registered. Therefore the system will "recognize" him each time he enters his access code.

### - Phase 3

Mr. White starts using the Sale/Purchase/Advertisement Site Portal. He wishes to register a new object to sell by auction. Mr. White registers the object, names it and enters a thoroughly description of it. He also indicates the sale conditions he wishes. At the end of the registration process, Mr. White validates the information and at that precise moment "consumes" one of the 10 actions his "Web Card" enables him. The system displays the number of actions remaining: 9.

### - Phase 4

Mr. White continues using the Sale Portal Site. He connects from his computer office. Now he wants to enter an advertisement for his spouse's company. Mr. White "inserts" his spouse's advertisement photo on the Sale Portal Site. He also indicates the times he wishes the advertisement to be displayed at. At the end the description process, Mr. White validates the information and at that precise moment "consumes" one of the 9 actions his "Web Card" enables him. The system displays the number of actions remaining: 8.

### - Phase 5

Within a few weeks Mr. White has used up all actions his card enables him, so he goes to a licensed point of sale in order to purchase another card.

### The method of the present invention: the "WEB Card" system

The "WEB Card" system can be described as follows:

### - Generic Definition

The "WEB Card" allows access and utilisation control of a web site's functions and sub-functions using an access code provided by the system and that the current or potential user can obtain on supports such as cards or other. It can even remunerate all or part of the interveners, the site owner, the site manager, or the users. This system is not influenced by the web site category, the site development method and tools, or by the site access tools.

### - Detailed Definition

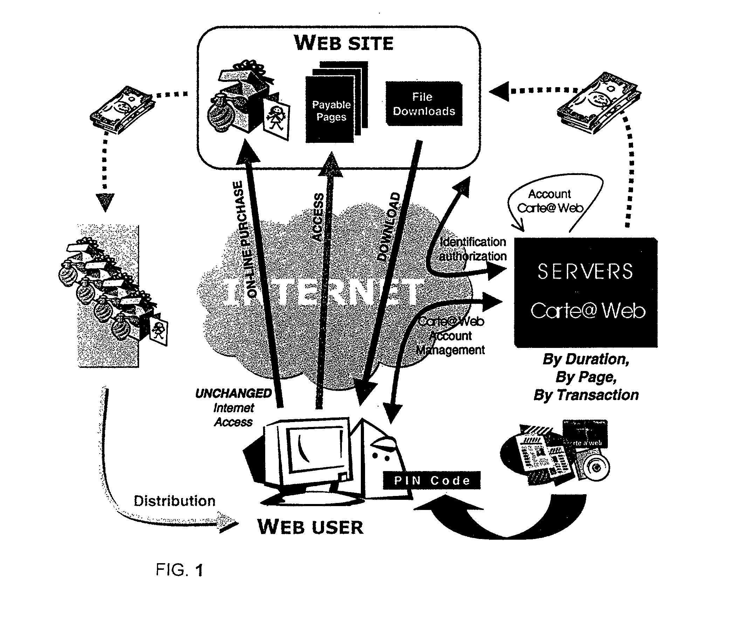

Referring now to FIG. **1**, the process is divided into 4 sub-processes represented herebelow:
o **Access Code and Related Functions Creation**
   The "WEB Card" management module (included in the other site management modules) allocates an access code.
   The access code can be defined as follows "AAAAAAAABBBBBBBB", two groups of eight alphanumerical positions. Possible combinations for this type of access code are of: 1,62 E⁵³
   This access code generates 3 functions:
   - User profile, such as: author, reader, purchaser, salesperson, etc.
   - Limited number of operations authorised (or specified), such as: 10 purchases, 10 sales, 10 consultations, 10 goods creation, etc.
   - Utilisation or access code validity duration, such as: 10 days, 2 weeks, 1 month, etc.

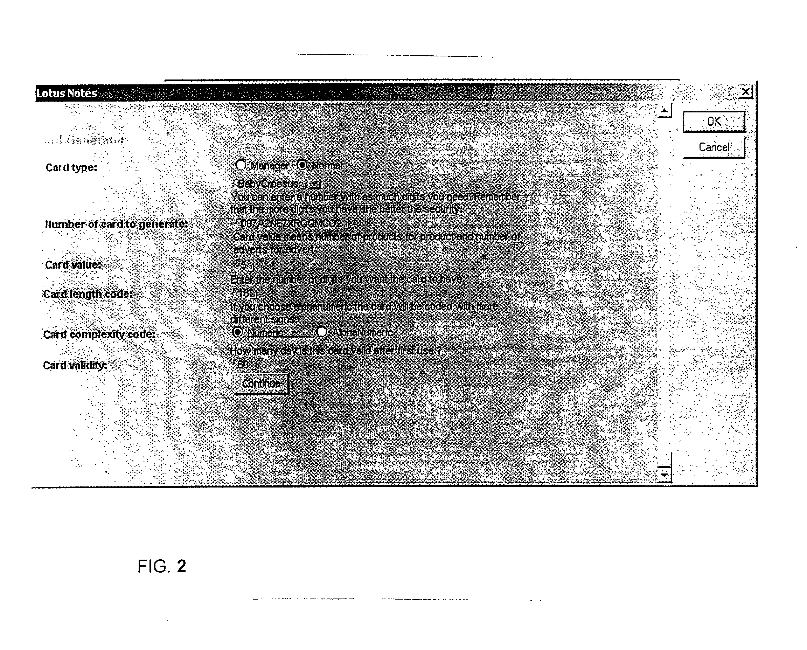

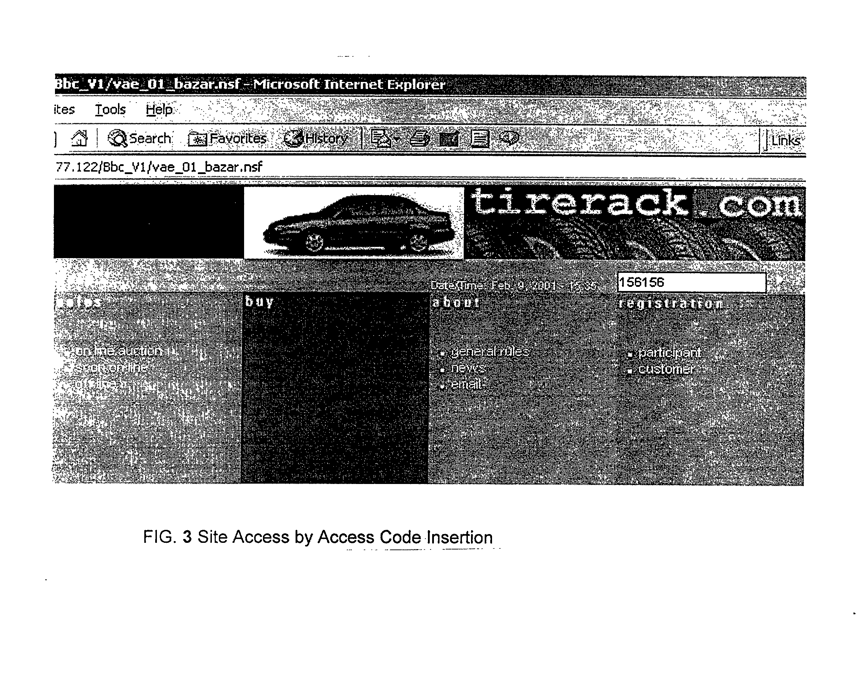

   This module generates three functions that can be set by the site owner, according to the web site category. Referring now to FIG. **2,** one of the WEB pages for the entering settings module is represented.
   Fig. 2: Example of ENTERING SETTINGS
o **Access Code Edition, Distribution and Acquisition**
   The second step of the process is editing a set of access codes and a media validity date, using the "WEB Card" management module.
   These access codes are recorded on a CD and sent to a media, card, scratch-off card, CD manufacturer, etc.
   The manufacturer produces the media containing primarily the access code, the WEB site's reference, the amount of authorised operations, the card validity duration, the utilisation validity duration and the access code's official acquisition price (as purchased by the final user).
   Therefore the site owner can issue access codes using the most convenient sale system.
   The current or potential final site user obtains the access code by purchasing the media at the sale location(s) selected by the distributor(s).
**o Access Code Utilisation to Access Site**
   The third step of the process is accessing the WEB site after having obtained the access code.
   This next step is managed by the "WEB Card" control module included in the site management programme.
   The module verifies the WEB site reference, the card validity duration and the validity duration of the card utilisation.
o **Access Code Utilisation to Operate Site**
   Referring now to FIG. **3,** the fourth and last step of the process is verifying the WEB site utilisation after having obtained the access code and accessed the WEB site.
   The "WEB Card" management module included in the site management programme manages the control process.
   The first task accomplished by the module (depending on the access code) is recognizing the user's role (purchaser, salesperson, editor, reader, etc.).
   The "WEB Card" management module then allows the site management modules to operate. These modules, depending on the site category and the user's role, will then guide the user.
   The "WEB Card" management module's second task, while using the site, is deducting each specified operation the user will execute, to indicate the amount of specified operations remaining and to end the process when the user's "operation credit" has expired, as indicated on the purchased media.

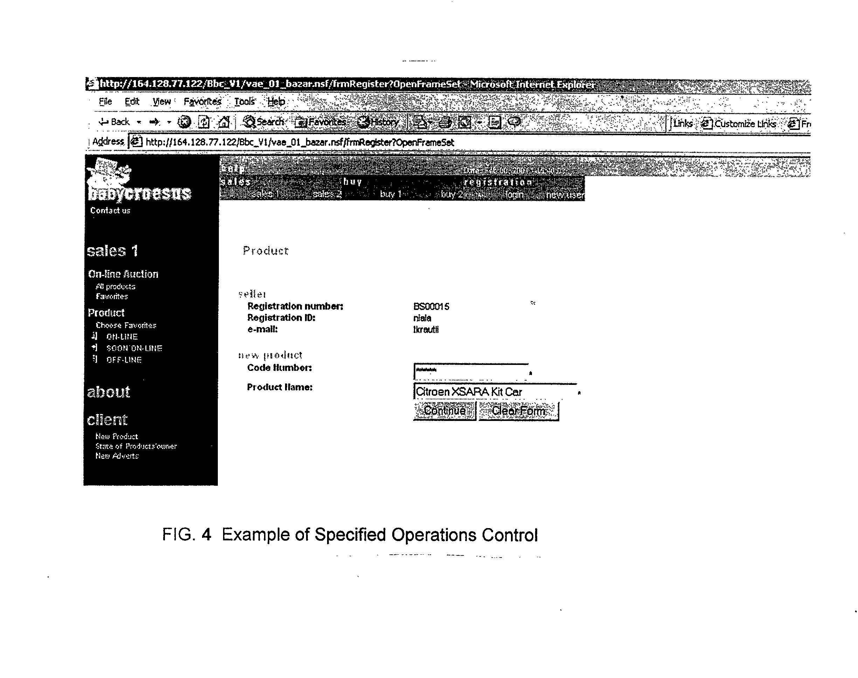

   FIG. **4** : Example of Specified Operations Control

Multiple variations and modifications are possible in the embodiments of the invention described here. Although certain illustrative embodiments of the invention have been shown and described here, a wide range of modifications, changes, and substitutions is contemplated in the foregoing disclosure. In some instances, some features of the present invention may be employed without a corresponding use of the other features. Accordingly, it is appropriate that the foregoing description be construed broadly and understood as being given by way of illustration and example only, the spirit and scope of the invention being limited only by the appended claims.

## Claims

1. A computer system having a computer-readable medium encoded with a method of allowing access and utilisation control of a web site's functions and sub-functions, the method using a system generated access code that the current or potential user can obtain on supports such as cards or other media, the method comprises the following modules:
h. a module to manage the commercial parameters of the system for clients,
i. a module to manage the technical parameters of the system for the clients, to deal with items like access control, security, IP addresses, MAC addresses, GPS, and other technical criteria,
j. a module to manage the dialog between the system and the clients,
k. a module to manage the dialog between third parties, like buyers, sellers of goods and services,
I. a module to manage the validation and feasibility of any transaction with the system,
m. a module to manage the locking and unlocking process of clients and transactions,
n. a module to manage all the operations concerning the access to codes, like generation of access codes, values, date of expiration,

2. The system of claim 1, further comprising a module of implementation of the system into the client web site dialoguing with the computer system.

3. The system of claims 1, or 2 further including remunerating means which remunerates all or part of the interveners, the site owner, the site manager, or the users and wherein further, the method further not being influenced by the web site category, the site development method and tools, or by the site access tools, the method comprising the following modules:
a. a module to manage the dialog with the client concerning the price of goods or services to be taken in account in the computer system,
b. a module to manage all the on-line accounting of transactions by all criteria like user, buyer, seller, payer,
c. a module to manage interconnection with all other payment media, like credit card, transfer, SMS payment,
d. a module to manage the saldo and balance process for all parties.
